# EUROPEAN PATENT SPECIFICATION

(11) **EP 3 778 079 B1**
(45) Date of publication and mention of the grant of the patent: **09.09.2026**
(21) Application number: 19777374.0
(22) Date of filing: 11.03.2019
(51) Int. Cl.: B23B 21/00, B23B 3/22, B23B 3/30, B23B 19/02, B23Q 1/48, B23Q 15/22, G05B 19/404, B23Q 15/26

(54) **MACHINE TOOL**
WERKZEUGMASCHINE
MACHINE-OUTIL

(30) Priority: 30.03.2018 JP 2018069448
(43) Date of publication of application: 17.02.2021
(73) Proprietor: Citizen Watch Co., Ltd., Nishitokyo-shi, Tokyo 188-8511 (JP); Citizen Machinery Co., Ltd., Nagano 389-0206 (JP)
(72) Inventor: KOBAYASHI Yosuke, Kitasaku-gun, Nagano 389-0206 (JP)
(74) Representative: Scott, Stephen John
(86) International application number: PCT/JP2019/009793
(87) International publication number: WO 2019/188220

(56) References cited:
- WO-A1-2010/004961
- JP-A- 2014 193 492
- US-A1- 2016 089 760
- US-A1- 2017 322 538

## Description

### TECHNICAL FIELD

The present disclosure relates to a machine tool for machining a workpiece with a cutting tool.

### BACKGROUND

Conventionally, there is known a machine tool for machining a workpiece with a cutting tool, wherein a workpiece held by a workpiece handling device is machined with a rotary tool in the form of a cutting tool, by rotating the rotary tool with respect to the workpiece and thereby allowing the workpiece to be machined from a tilted direction (refer, for example, to JP 2009-107078 A (PTL 1)). Further, a machine tool which includes either a driving unit for displacing a tool holding device in an X-direction that is orthogonal to the axis of a spindle, or a driving unit for displacing the spindle in the X-direction, is known (refer, for example, to PTL 2).

### CITATION LIST

### Patent Literature

PTL 1: JP 2009-107078 A
PTL 2: US 2016/089760 A1

### SUMMARY

### (Technical Problem)

It would thus be helpful to provide a machine tool, which is capable of performing machining of a workpiece held by a spindle, from a direction tilted with respect to a workpiece, by rotating a cutting tool mounted on a tool rest, and which is designed to have a compact structure.

### (Solution to Problem)

According to the present disclosure, there is provided a machine tool comprising: a spindle for holding a workpiece; a spindle X-axis moving mechanism for moving the spindle in an X-axis direction that is orthogonal to a Z-axis direction parallel to the axis of the spindle; a tool rest equipped with a cutting tool for machining the workpiece; and a tool rest X-axis moving mechanism for moving the tool rest in the X-axis direction; wherein the tool rest is provided with a swivel mechanism for swiveling the cutting tool, characterized in that machine tool further comprises: a calculating means for calculating a moving distance of the cutting tool in the X-axis direction when the cutting tool is to be swiveled by a desired swivel angle by means of the swivel mechanism; and a control means configured to control operation of the tool rest X-axis moving mechanism to move the tool rest in the X-axis direction in accordance with the moving distance as calculated by the calculating means, control operation of the spindle X-axis moving mechanism, such that the spindle is moved in a direction opposite to the X-axis direction following the cutting tool when the moving distance as calculated by the calculating means is greater than the maximum moving distance of the tool rest in the X-axis direction, and control operation of the swivel mechanism to swivel the cutting tool in accordance with the desired swivel angle.

In the machine tool according to the present disclosure, with the constitution described above, the control means is configured to control operation of the spindle X-axis moving mechanism such that the spindle is moved in the direction opposite to the X-axis direction by a distance calculated by subtracting the maximum moving distance from the moving distance calculated by the calculating means.

In the machine tool according to the present disclosure, with the constitution described above, it is preferred that the main spindle is a back side spindle that faces a front side spindle; the tool rest is equipped with a front side cutting tool for machining a workpiece held by the front side spindle, with a cutting edge facing away from the cutting tool; and the swivel mechanism has a swivel axis set at the cutting edge of the front side cutting tool.

### (Advantageous Effect)

Since the operation of the spindle X-axis moving mechanism is controlled such that the spindle moves in the X-axis direction following the cutting tool according to the moving distance of the cutting tool in the X-axis direction calculated by the calculating means, it is possible according to the present disclosure to provide a machine tool which is capable of suppressing the stroke of the tool rest in the X-axis direction and machining the workpiece held by the spindle from a tilted direction, and which is designed to have a compact structure.

### BRIEF DESCRIPTION OF THE DRAWINGS

FIG. 1 is an explanatory view schematically illustrating the constitution of the machine tool according to one embodiment of the present disclosure.
FIGS. 2A to 2C are explanatory views illustrating the procedure for machining the workpiece held by the back side spindle, while swiveling the tool together with the tool rest.
FIGS. 3A to 3D are explanatory views illustrating the procedure for machining the workpiece held by the back side spindle, while swiveling the cutting tool together with the tool rest by a larger swivel angle.
FIG. 4 is a flowchart illustrating the steps for determining the movement in the X-axis direction of the back side spindle and the tool rest in accordance with the swivel angle
of the tool rest.

### DETAILED DESCRIPTION

A machine tool 1 according to an embodiment of the present disclosure is configured as a CNC lathe and comprised of a front side spindle 3 arranged on a base 2, and a back side spindle 4 that serves as a spindle opposed to the front side spindle 3 at a predetermined interval.

The front side spindle 3 includes a chuck 3a at its tip, so that the workpiece W can be held by the chuck 3a. The front side spindle 3 is adapted to be rotationally driven by a drive source, such as an electric motor (not illustrated), and is rotatable together with the workpiece W.

The back side spindle 4 is provided with a chuck 4a at its tip end portion, so that the workpiece W machined by the front side spindle 3 can be received and held by the chuck 4a. The back side spindle 4 is adapted to be rotationally driven by a drive source, such as an electric motor (not illustrated), and rotates together with the workpiece W.

A guide bush 5 is provided front of the front side spindle 3 at a predetermined interval. The guide bush 5 is arranged coaxially with the front side spindle 3 and fixed to the base 2, for rotatably supporting the tip end portion of the workpiece W held by the front side spindle 3.

The front side headstock 6 for arranging the front side main spindle 3 thereon is mounted on the base 2 via a Z-axis guide rail 6a, which is arranged along the Z-axis direction parallel to the axis of the front side spindle 3. A drive mechanism (not illustrated) including a ball screw, an electric motor, etc. is provided between the front side headstock 6 and the base 2, such that the front side headstock 6 can be driven by the drive mechanism and moved in the Z-axis direction, along the Z-axis guide rail 6a. The position of the front side spindle 3 in the Z-axis direction can be changed by moving the front side spindle headstock 6 in the Z-axis direction.

The back side spindle 7 for arranging the back side spindle 4 thereon is mounted on the base 2 via a Z-axis guide rail 7a, which is arranged along the Z-axis direction parallel to the axis of the back side spindle 4. A drive mechanism (not illustrated) including a ball screw, an electric motor, etc., is provided between the back side headstock 7 and the base 2, such that the back side headstock 7 can be driven by the drive mechanism moved and moved in the Z-axis direction, along the Z-axis guide rail 7a. The position of the back side spindle 4 in the Z-axis direction can be changed by moving the back side headstock 7 in the Z axis direction.

The back side spindle 4 is mounted on the back side headstock 7 via an X-axis guide rail 7b that is arranged along the X-axis direction orthogonal to the Z-axis direction. A drive mechanism (not illustrated) including a ball screw, an electric motor, etc. is provided between the ear spindle 4 and the back side headstock 7, such that the back side spindle 4 can be driven by the drive mechanism and moved in the X-axis direction runs along the X-axis guide rail 7b, to change the position in the X-axis direction. That is, in the present embodiment, the X-axis guide rail 7b and the drive mechanism constitute a spindle X-axis moving mechanism for moving the back side spindle 4 in the X-axis direction.

The machine tool 1 includes a tool rest 10. The tool rest 10 includes a mounting portion 10a, and the mounting portion 10a is equipped with a front side cutting tool 11 for machining the workpiece W held by the front side spindle 3, and a back side cutting tool 12 as a cutting tool for machining the workpiece W held by the back side spindle. In the present embodiment, the front side cutting tool 11 and the back side cutting tool 12 are comprised of rotary cutting tools (rotary tools), such as drills that are rotationally driven by a drive source, such as an electric motor (not illustrated). The front side cutting tool 11 and the back side cutting tool 12 are mounted on the mounting portion 10a with their blade tips (tips in the axial direction) facing each other.

The tool rest 10 is mounted on the movable base 13. The movable base 13 is mounted on the base 2 via an X-axis guide rail 13a arranged along the X-axis direction. A drive mechanism (not illustrated) including a ball screw, an electric motor, etc. is provided between the moving base 13 and the base 2, such that the moving base 13 can be driven by the driving mechanism for movement n the X-axis direction along the X-axis guide rail 13a. That is, in the present embodiment, the X-axis guide rail 13a and the drive mechanism constitute a tool rest X-axis moving mechanism for moving the tool rest 10 in the X-axis direction. By moving the moving table 13 in the X direction, the positions of the tool rest 10, the front side cutting tool 11 and the back side cutting tool 12 in the X axis direction are changed.

The tool rest 10 includes an arm portion 10b extending horizontally from an end portion of the mounting portion 10a and is rotatably supported by the moving base 13 at the arm portion 10b. A drive mechanism (not illustrated) including an electric motor, a speed reduction gearing, etc., is provided between the tool rest 10 and the moving base 13, such that the tool rest 10 can be rotationally driven by the drive mechanism, to swivel with respect to the movable base 13, around a swivel axis 14 that is perpendicular to the Z-axis direction and the X-axis direction. That is, in the present embodiment, the swivel axis 14 and the drive mechanism constitute a swivel mechanism for causing a B-axis swiveling, about the swivel axis 14, of the tool rest 10 and the front side cutting tool 11 and the back side cutting tool 12. By swiveling the tool rest 10 about the swivel axis 14, the tilt angle formed by the front side cutting tool 11 and the back side cutting tool 12 with respect to the workpiece W is changed.

Here, the tilt angle formed by the front side cutting tool 11 and the back side cutting tool 12 with respect to the workpiece W is the angle formed by the axial direction of the front side cutting tool 11 and the back side cutting tool 12 with respect to the axial direction of the workpiece W, i.e., the Z-axis direction, and it is same as the swivel angle α of the tool rest 10.

In the present embodiment, the front side cutting tool 11 is mounted so that the cutting edge is located on the axis of the swivel axis 14. As a result, the tilt angle of the front side cutting tool 11 with respect to the workpiece W held by the front side spindle 3 can be changed, without changing the position of the cutting edge of the front side cutting tool 11 in the X-axis direction. It is thus possible to easily control the swiveling or movement of the front side cutting tool 11 when machining the workpiece W held by the front side spindle 3.

The machine tool 1 includes a control unit 20 as control means. The control unit 20 may be comprised, for example, of a microcomputer including a CPU (Central Processing Unit) and a storage unit, such as a memory. The drive mechanism for rotationally driving the front side spindle 3, the drive mechanism for rotationally driving the back side spindle 4, the drive mechanism for driving the front side spindle 3 in the Z-axis direction, the drive mechanism for driving the back side spindle 4 in the Z-axis direction, the drive mechanism for driving the back side spindle 4 in the X-axis direction, the drive mechanism for swiveling the tool rest 10, and the drive source for rotationally driving the front side cutting tool 11 and the back side cutting tool 12, etc., are controlled by the control unit 20.

An input unit 30 for inputting various machining conditions, such as a swivel angle of the tool rest 10, is connected to the control unit 20. Based on the machining conditions input to the input unit 30, the control unit 20 performs integrated control of the mechanisms described above while using the CNC function, to execute machining of the workpiece W by means of the front side cutting tool 11 or the back side cutting tool 12.

The control unit 20 has a function as a calculation unit and operates when the workpiece W held by the back side spindle 4 is to be machined by the back side cutting tool 12. In this instance, when the swivel angle α of the tool rest 10 is input to the input unit 30, the control unit calculates the moving distance XA in the X-axis direction with respect to the reference position P in the X-axis direction of the cutting edge of the back side cutting tool 12, corresponding to the swivel angle α of the tool rest.

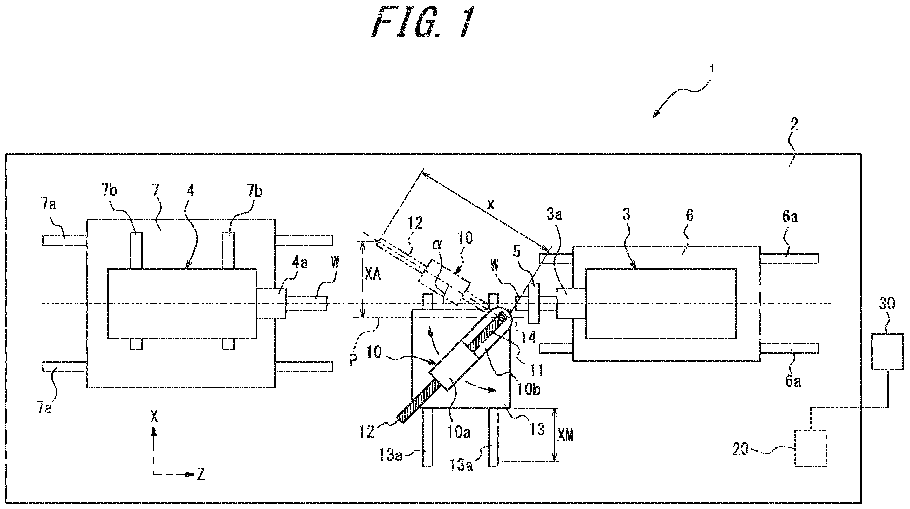

In this instance, as illustrated in FIG. 1, the reference position P in the X-axis direction of the cutting edge of the back side cutting tool 12 is a predetermined X-axis direction position corresponding to the processing part of the workpiece W held by the back side spindle 4. In FIG. 1, the reference position P is represented by a line segment parallel to the Z-axis direction.

It is noted that, in the present embodiment, as illustrated in FIG. 1, the reference position P is set to a position that is shifted in the X-axis direction with respect to the axis of the front side spindle 3 or the back side spindle 4. However, the reference position P in the X-axis direction may be suitably changed corresponding to the machining position of the workpiece W. For example, the reference position P may be set to a position that coincides with the axis of 3 to the back side spindle 4.

As illustrated in FIG. 1, the moving distance XA as calculated by the control unit 20 is the distance in the X-axis direction between the cutting edge (tip end) of the back side cutting tool 12 and the reference position P, assuming that the tool rest has swiveled by a desired swivel angle α input to the input unit 30 (as indicated by a chain double-dashed line in FIG. 1), such that the cutting edge of the back side cutting tool 12 is located above the reference position P as seen in FIG. 1. As illustrated in FIG. 1, when the movable table 13 is located so that the cutting edge of the back side cutting tool 12 assumes the reference position P when the swivel angle α is 0 degree, it is possible for the control unit 20 to calculate the moving distance XA, for example, based on the distance X from the swivel axis 14 to the cutting edge of the back side cutting tool 12 and the swivel angle α, which have been input to the control unit 20 in advance, and using the equation XA = x•sin α.

The control unit 20 controls the operation of the spindle X-axis moving mechanism and the tool rest X-axis moving mechanism, that is, the movement of the tool rest 10 and the back side spindle 4 in the X-axis direction, such that the position in the X-axis direction of the cutting edge of the back side cutting tool 12, which has swiveled by the desired swivel angle α, is shifted by the moving distance XA calculated as described above, so as to be situated at the reference position P.

Next, the manner of machining the workpiece W with the machine tool 1 will be described.

When the workpiece W held by the front side spindle 3 is to be machined by the front side cutting tool 11 from a direction tilted at a desired angle with respect to the Z-axis direction, a desired swivel angle is input to the input unit 30 such that the tool rest 10 is swiveled and the front side cutting tool 11 is oriented in a direction tilted by the desired swivel angle with respect to the Z-axis direction. The movement of the front side spindle 3 and the movement of the tool rest 10 are then controlled such that the front side cutting tool approaches the workpiece W being held while maintaining the swivel angle. The front side cutting tool 11 is then urged against the workpiece W held by the front side spindle 3, to carry out drilling or the like machining of the workpiece W from a direction tilted with respect to the Z-axis.

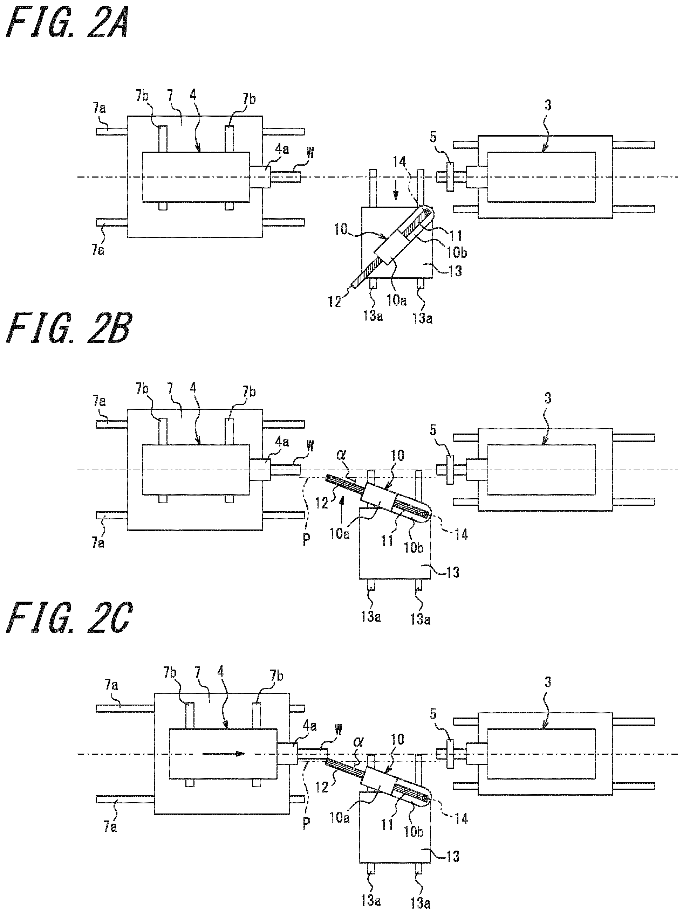

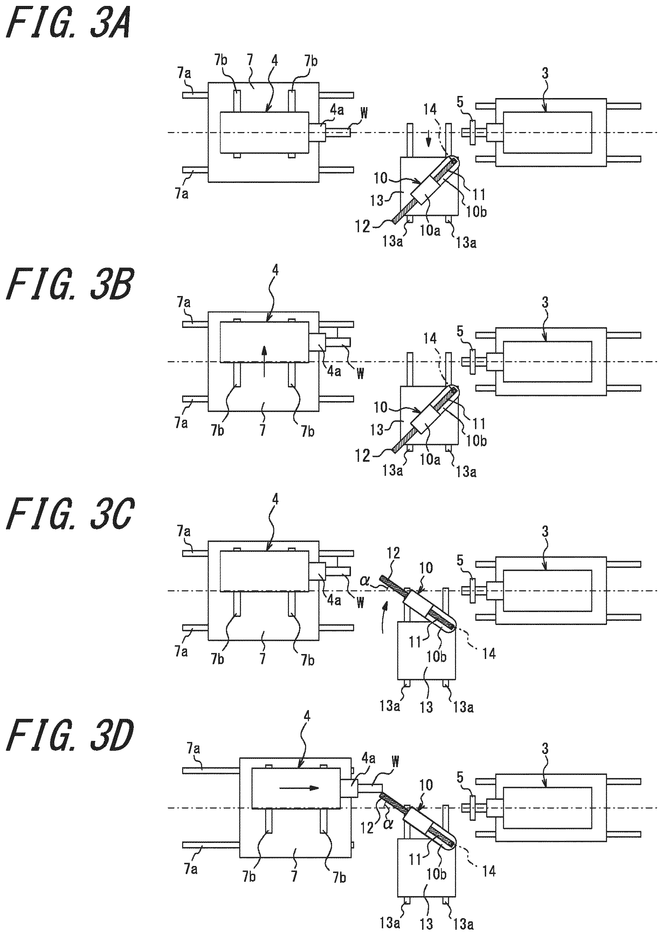

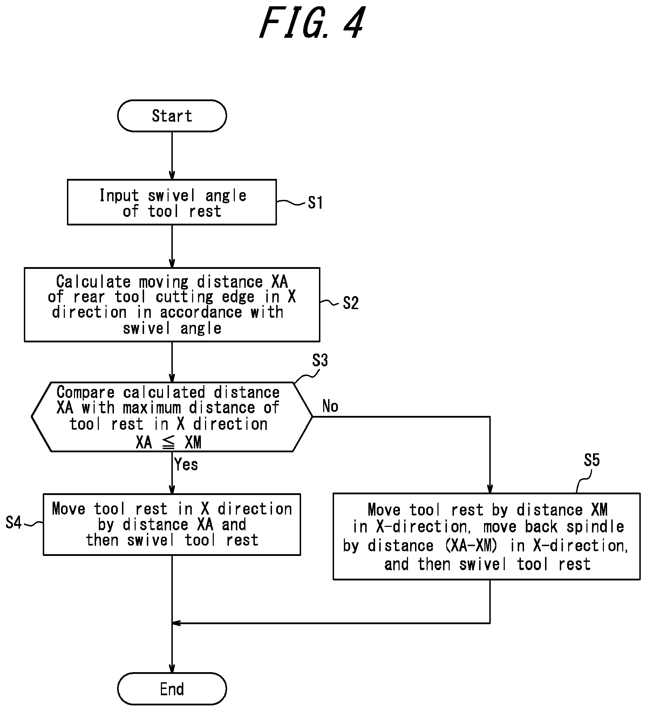

On the other hand, when the workpiece W held by the back side spindle 4 is to be machined by the back side cutting tool 12 that is tilted by a desired tilt angle, the control unit 20 carries out the control based on the flowchart illustrated in FIG. 4, such that the steps illustrated in FIGS. 2 and 3 are followed, to thereby carry out machining of the workpiece W by the back side cutting tool 12.

First, when the workpiece W is to be machined with the back side cutting tool 12 tilted at a desired tilt angle with respect to the workpiece W, as illustrated in step S1 of FIG. 4, the swivel angle α of the tool rest 10 corresponding to that tilt angle is set and input to the input unit 30. Then, in step S2, the control unit 20 having the function as a calculation means serves to calculate the moving distance XA, in the X-axis direction, of the cutting edge of the back side cutting tool 12 with respect to the reference position P, corresponding to the swivel angle α of the tool rest 10,

Next, as illustrated in step S3 of FIG. 4, the control unit 20 compares the calculated moving distance XA with the maximum moving distance XM of the tool rest 10 in the X-axis direction.

In this instance, the maximum distance XM of the tool rest 10 movable in the X-axis direction, as illustrated in FIG. 1, is the maximum distance of the tool rest 10 that is movable on the moving mechanism in the direction away from the reference position P, starting from the position where the moving distance XA of the cutting edge of the back side cutting tool 12 is calculated. In the case illustrated in FIG. 1, the maximum distance XM is the distance measured along the X-axis direction, from the initial position of the tool rest 10 (the position where the cutting edge of the back side cutting tool 12 at the swivel angle α of 0 degree is at the reference position P), to the stroke end of the X-axis guide rail 13a illustrated in the lower side of the figure.

When it is determined in step S3 that the moving distance XA calculated by the control unit 20 is not more than the maximum distance XM over which the tool rest 10 is movable in the X-axis direction, then in step S4, the control unit 20 causes the tool rest 10 to be moved in the X-axis direction by the moving distance XA, as illustrated in FIG. 2A, and the tool rest 10 to be swiveled about the swivel axis 14 for achieving the swivel angle α, as illustrated in FIG. 2B. When the swivel angle of the tool rest 10 becomes α, the X-axis direction position of the cutting edge of the back side cutting tool 12 is located on the reference position P.

Since the position of the cutting edge of the back side cutting tool 12 in the X-axis direction can be brought into coincidence with the reference position P by the series of steps as described above, as illustrated in FIG. 2C, when the control unit 20 carries out machining the workpiece W while maintaining the swivel angle α, by moving the back side spindle 4 in the Z axis direction and rotating the back side cutting tool 12, such that the workpiece W can be subjected to drilling from a direction tilted by the swivel angle α with respect to the Z-axis direction.

Thus, when the swivel angle α of the tool rest 10 input to the input unit 30 is not more than the predetermined value, since the moving distance XA calculated by the control unit 20 is not more than the maximum distance XM of the tool rest 10, the workpiece W can be machined by the back side cutting tool 12 by moving only the tool rest 10 in the X-axis direction, while maintaining the back side spindle 4 in a position coaxially opposing the front side spindle 3.

On the other hand, when the swivel angle α of the tool rest 10 input to the input unit 30 is larger than the predetermined value, it is determined in step S3 that the moving distance XA calculated by the control unit 20 is larger than the maximum movable distance XM over which the tool rest 10 is movable in the X-axis direction from the initial position.

In this instance, in step S5, as illustrated in FIG. 3A, the control unit 20 moves the tool rest 10 by the maximum distance XM in the X-axis direction (downward in FIG. 3) and then, as illustrated in FIG. 3B, moves the back side spindle 4 in the direction opposite to the X-axis movement direction of the tool rest 10, by the distance calculated by the moving distance XA subtracted by the maximum distance XM. That is, when the moving distance XA calculated by the control unit 20 exceeds the maximum movable distance XM of the tool rest 10, the tool rest 10 is moved in the X axis direction by the maximum distance XM, and the back side spindle 4 is moved in the direction opposite to the tool rest 10 by the shortage of the distance exceeding the maximum movable distance XM.

After moving the tool rest 10 and the back side spindle 4 in the X-axis direction as described above, the control unit 20 causes the tool rest 10 to swivel about the swivel axis 14 so as to achieve the swivel angle α, as illustrated in FIG. 3C. When the swivel angle α of the tool rest 10 is reached, the position of the cutting edge of the back side cutting tool 12 in the X-axis direction is located on the reference position P.

Since the position of the cutting edge of the back side cutting tool 12 in the X-axis direction can be brought into coincidence with the reference position P by the above-described series of steps, as illustrated in FIG. 3D, by moving the back side spindle 4 in the Z axis direction and rotating the back side cutting tool 12 to carry out machining of the workpiece W while maintaining the swivel angle α, the workpiece W can be subjected to drilling in a direction tilted by the swivel angle α with respect to the Z-axis direction.

As described above, when the swivel angle α of the tool rest 10 input to the input unit 30 is larger than the predetermined value, the moving distance XA calculated by the control unit 20 becomes larger than the maximum distance XM of the tool rest 10. On such occasion, the tool rest 10 is moved in the X-axis direction by the maximum distance XM, and the back side spindle 4 is moved in the direction opposite to the tool rest 10 in order to compensate for the missing amount among the moving distance XA, that cannot be covered by the movement of the tool rest 10 by the maximum distance XM. Therefore, even if the back side cutting tool 12 is tilted at a large tilt angle that would not allow machining only by moving the tool rest 10 in the X-axis direction, it is still possible to carry out machining.

As described above, according to the machine tool 1 of the present embodiment, by controlling the tool rest 10 and the back side spindle 4 in coordination with each other for movement in the X axis direction, the workpiece W can be machined even if the swivel angle α of the tool rest 10 is larger than a predetermined value, without increasing the moving stroke of the tool rest 10 in the X axis direction. Therefore, when the workpiece W held by the back side spindle 4 is machined by the back side cutting tool 12 mounted on the tool rest 10, the tool rest 10 can be swiveled about the swivel axis 14 and tilted with respect to the Z-axis direction, thereby allowing the machine tool 1 to carry out machining of the workpiece W from various directions. The machine tool is capable of machining of the workpiece W from a tilted direction regardless of the swivel angle α of the tool rest 10, while suppressing the stroke of the tool rest 10 in the X-axis direction, thereby allowing downsizing of the machine tool 1.

Further, when the tool rest 10 is swiveled to reach the swivel angle α based on the swivel angle α that has been input to the input unit 30, it is possible to calculate the moving distance XA in the X-axis direction between the cutting edge of the back side cutting tool 12 and the processing part of the workpiece W, and to determine in advance, according to the calculation result, to which position in the X-axis direction the tool rest 10 and the back side spindle 4 should be moved. It is therefore possible to facilitate the movement control of the back side spindle 4.

For example, in the embodiment described above, the machine tool 1 is provided with only the tool rest 10 that swivels around the revolving shaft 14, though the present disclosure is not limited to this arrangement. Thus, there may be provided another tool rest different from the tool rest 10, configured such that the workpiece W can be machined by a cutting tool attached to the other tool rest.

In the embodiment described above, the machine tool 1 is provided with a pair of spindles comprised of the front side spindle 3 and the back side spindle 4, though the present disclosure is not limited to this arrangement. Thus, the machine tool may be configured to have a single spindle only.

In the embodiment described above, the front side cutting tool 11 and the back side cutting tool 12 are comprised of rotary cutting tools, though the present disclosure is not limited to this arrangement. Thus, there may be used another cutting tool, such as an end mill.

In the embodiment described above, the swivel axis 14 is set at a position where its axis passes through the cutting edge of the front side cutting tool 11, though the present disclosure is not limited to this arrangement. Thus, the position of the swivel axis may be changed in various manner, insofar as the position of the cutting edge of the back side cutting tool 12 in the X-axis direction changes when the tool rest 10 swivels.

### REFERENCE SIGNS LIST

- 1: Machine tool
- 2: Base
- 3: Front side spindle
- 3a: Chuck
- 4: Back side spindle
- 4a: Chuck
- 5: Guide bush
- 6: Front side headstock
- 6a: Z axis guide rail
- 7: Back side headstock
- 7a: Z axis guide rail
- 7b: X axis guide rail
- 10: Tool rest
- 10a: Mounting part
- 10b: Arm portion
- 11: Front side cutting tool
- 12: Back side cutting tool (cutting tool)
- 13: Moving stand
- 13a: X-axis guide rail
- 14: Swivel axis
- 20: Control unit (control means, calculation means)
- 30: Input section
- W: Workpiece
- α: Swivel angle
- P: Reference position
- XA: Moving distance
- XM: Maximum distance

## Claims

1. A machine tool (1), comprising:
a spindle for holding a workpiece (W);
a spindle X-axis moving mechanism for moving the spindle in an X-axis direction that is orthogonal to a Z-axis direction parallel to the axis of the spindle;
a tool rest (10) equipped with a cutting tool (12) for machining the workpiece (W);
and
a tool rest X-axis moving mechanism for moving the tool rest (10) in the X-axis direction;
wherein the tool rest (10) is provided with a swivel mechanism for swiveling the cutting tool (12), by a swivel angle measured between the main axis of the cutting tool and the z-axis direction parallel to the axis of the spindle, wherein the angle is zero when the tool rest is not swiveled and the main axis of the tool is parallel to the z-axis, wherein a maximum distance (XM) is a distance measured along the X-axis direction, from the position of the tool rest when the swivel angle is zero, to the stroke end of the tool rest X-axis moving mechanism, and wherein the machine tool (1) further comprises:
a calculating means (20) for calculating a moving distance (XA) of the cutting tool (12) in the X-axis direction when the cutting tool (12) is to be swiveled by a desired swivel angle by means of the swivel mechanism, wherein the moving distance (XA) is the distance in the X-axis direction between the tip end of the cutting tool (12) positions before and after the the cutting tool is swiveled; and
a control means (20) configured to:
control operation of the tool rest X-axis moving mechanism to move the tool rest (10) in the X-axis direction in accordance with the moving distance (XA) as calculated by the calculating means (20),
control operation of the spindle X-axis moving mechanism such that the spindle is moved in a direction opposite to the X-axis direction following the cutting tool (12) by a distance calculated by subtracting the maximum moving distance (XM) from the moving distance (XA) calculated by the calculating means (20), when the moving distance (XA) calculated by the calculating means (20) is greater than the maximum moving distance (XM) of the tool rest (10) in the X-axis direction, and
control operation of the swivel mechanism to swivel the cutting tool (12) in accordance with the desired swivel angle.

2. The machine tool (1) according to claim 1, wherein:
the spindle is a back side spindle (4) that faces a front side spindle (3);
the tool rest (10) is equipped with a front side cutting tool (11) for machining a workpiece (W) held by the front side spindle, with a cutting edge facing away from the cutting tool (12); and
the swivel mechanism has a swivel axis set at the cutting edge of the front side cutting tool (11).

## Patentansprüche

1. Maschinenwerkzeug (1), umfassend:
eine Spindel zum Halten eines Werkstücks (W);
einen Spindel-X-Achsen-Bewegungsmechanismus zum Bewegen der Spindel in eine X-Achsen-Richtung, die orthogonal zu einer zu der Achse der Spindel parallelen Z-Achsen-Richtung ist;
eine Werkzeugauflage (10), die mit einem Schneidwerkzeug (12) zum Bearbeiten des Werkstücks (W) ausgerüstet ist; und
einen Werkzeugauflage-X-Achsen-Bewegungsmechanismus zum Bewegen der Werkzeugauflage (10) in der X-Achsen-Richtung;
wobei die Werkzeugauflage (10) mit einem Schwenkmechanismus versehen ist, zum Schwenken des Schneidwerkzeugs (12) um einen Schwenkwinkel, der zwischen der Hauptachse des Schneidwerkzeugs und der zu der Achse der Spindel parallelen Z-Achsen-Richtung gemessen wird, wobei der Winkel null ist, wenn die Werkzeugauflage nicht geschwenkt wird und die Hauptachse des Werkzeugs parallel zu der Z-Achse ist, wobei eine maximale Entfernung (XM) eine Entfernung ist, die entlang der X-Achsen-Richtung von der Position der Werkzeugauflage, wenn der Schwenkwinkel null ist, zu dem Hubende des Werkzeugauflage-X-Achsen-Bewegungsmechanismus gemessen wird, und wobei das Maschinenwerkzeug (1) ferner Folgendes umfasst:
ein Berechnungsmittel (20) zum Berechnen einer Bewegungsentfernung (XA) des Schneidwerkzeugs (12) in der X-Achsen-Richtung, wenn das Schneidwerkzeug (12) um einen gewünschten Schwenkwinkel mittels des Schwenkmechanismus geschwenkt werden soll, wobei die Bewegungsentfernung (XA) die Entfernung in der X-Achsen-Richtung zwischen dem Spitzenende der Positionen des Schneidwerkzeugs (12) ist, bevor und nachdem das Schneidwerkzeug geschwenkt wird; und
ein Steuermittel (20), das dazu konfiguriert ist:
einen Betrieb des Werkzeugauflage-X-Achsen-Bewegungsmechanismus dazu zu steuern, die Werkzeugauflage (10) in der X-Achsen-Richtung gemäß der Bewegungsentfernung (XA), wie durch das Berechnungsmittel (20) berechnet, zu bewegen,
einen Betrieb des Spindel-X-Achsen-Bewegungsmechanismus derart zu steuern, dass die Spindel in eine Richtung entgegengesetzt zu der X-Achsen-Richtung, die dem Schneidwerkzeug (12) folgt, um eine Entfernung bewegt wird, die durch Subtrahieren der maximalen Bewegungsentfernung (XM) von der durch das Berechnungsmittel (20) berechneten Bewegungsentfernung (XA) berechnet wird, wenn die durch das Berechnungsmittel (20) berechnete Bewegungsentfernung (XA) größer ist als die maximale Bewegungsentfernung (XM) der Werkzeugauflage (10) in der X-Achsen-Richtung, und
einen Betrieb des Schwenkmechanismus dazu zu steuern, das Schneidwerkzeug (12) gemäß dem gewünschten Schwenkwinkel zu schwenken.

2. Maschinenwerkzeug (1) nach Anspruch 1, wobei:
die Spindel eine Rückseitenspindel (4) ist, die einer Vorderseitenspindel (3) zugewandt ist;
die Werkzeugauflage (10) mit einem Vorderseitenschneidwerkzeug (11) zum Bearbeiten eines Werkstücks (W), das von der Vorderseitenspindel gehalten wird, ausgerüstet ist, wobei eine Schneidkante von dem Schneidwerkzeug (12) abgewandt ist; und
der Schwenkmechanismus eine Schwenkachse aufweist, die an der Schneidkante des Vorderseitenschneidwerkzeugs (11) angesetzt ist.

## Revendications

1. Machine-outil (1), comprenant :
une broche destinée à maintenir une pièce (W) ;
un mécanisme de déplacement de broche selon l'axe X destiné à déplacer la broche dans une direction de l'axe X qui est orthogonale à une direction de l'axe Z parallèle à l'axe de la broche ;
un support d'outil (10) équipé d'un outil de coupe (12) destiné à usiner la pièce (W) ; et
un mécanisme de déplacement de support d'outil selon l'axe X destiné à déplacer le support d'outil (10) dans la direction de l'axe X ;
dans laquelle le support d'outil (10) est doté d'un mécanisme de pivotement pour faire pivoter l'outil de coupe (12), d'un angle de pivotement mesuré entre l'axe principal de l'outil de coupe et la direction de l'axe Z parallèle à l'axe de la broche, dans lequel l'angle est de zéro lorsque le support d'outil n'est pas pivoté et que l'axe principal de l'outil est parallèle à l'axe Z, dans lequel une distance maximale (XM) est une distance mesurée le long de la direction de l'axe X, de la position du support d'outil lorsque l'angle de pivotement est de zéro jusqu'à la fin de course du mécanisme de déplacement de support d'outil selon l'axe X, et dans lequel la machine-outil (1) comprend en outre :
un moyen de calcul (20) destiné à calculer une distance de déplacement (XA) de l'outil de coupe (12) dans la direction de l'axe X lorsque l'outil de coupe (12) doit pivoter d'un angle de pivotement souhaité au moyen du mécanisme de pivotement, dans lequel la distance de déplacement (XA) est la distance dans la direction de l'axe X entre les positions d'extrémité pointue de l'outil de coupe (12) avant et après que l'outil de coupe ne pivote ; et
un moyen de commande (20) configuré pour :
commander l'actionnement du mécanisme de déplacement du support d'outil selon l'axe X pour déplacer le support d'outil (10) dans la direction de l'axe X en fonction de la distance de déplacement (XA) telle que calculée par le moyen de calcul (20),
commander l'actionnement du mécanisme de déplacement de broche selon l'axe X de telle sorte que la broche soit déplacée dans une direction opposée à la direction de l'axe X en suivant l'outil de coupe (12) d'une distance calculée en soustrayant la distance de déplacement maximale (XM) de la distance de déplacement (XA) calculée par le moyen de calcul (20), lorsque la distance de déplacement (XA) calculée par le moyen de calcul (20) est supérieure à la distance de déplacement maximale (XM) du support d'outil (10) dans la direction de l'axe X, et
commander l'actionnement du mécanisme de pivotement pour faire pivoter l'outil de coupe (12) en fonction de l'angle de pivotement souhaité.

2. Machine-outil (1) selon la revendication 1, dans laquelle :
la broche est une broche côté arrière (4) qui fait face à une broche côté avant (3) ;
le support d'outil (10) est équipé d'un outil de coupe côté avant (11) destiné à usiner une pièce (W) maintenue par la broche côté avant, avec un bord de coupe orienté à l'opposé de l'outil de coupe (12) ; et
le mécanisme de pivotement a un axe de pivotement situé au niveau du bord de coupe de l'outil de coupe côté avant (11).
